# FASCICULE DE BREVET EUROPEEN

(11) **EP 0 593 376 B1**
(45) Date de publication et mention de la délivrance du brevet: **09.07.1997**
(21) Numéro de dépôt: 93440082.1
(22) Date de dépôt: 08.10.1993
(51) Int. Cl.: B62D 13/02, B62D 13/04

(54) **Direction mécanique forcée, en particulier pour semi-remorques extensibles**
Mechanische Zwangslenkung, insbesondere für verlängerbare Sattelauflieger
Mechanically forced steering in particular for extendable semi-trailer

(30) Priorité: 12.10.1992 FR 9212386
(43) Date de publication de la demande: 20.04.1994
(73) Titulaire: Diebolt, Rémy, F-67440 Marmoutier (FR)
(72) Inventeur: Diebolt, Rémy, F-67440 Marmoutier (FR)
(74) Mandataire: Nuss, Pierre

(56) Documents cités:
- BE-A- 545 109
- CH-A- 579 473
- DE-U- 8 711 679
- US-A- 3 322 439
- US-A- 3 690 698

## Description

La présente invention concerne le domaine des véhicules de transport poids-lourds de grande longueur, notamment des semi-remorques, et a pour objet une direction mécanique forcée, en particulier pour semi-remorques extensibles.

Les ensembles routiers, notamment pour le transport de charges de grande longueur, à savoir de grumes ou d'éléments de construction de grande longueur ou autre, sont généralement constitués par un tracteur et par un arrière-train ou une semi-remorque adaptés ou s'adaptant à la longueur de la charge à transporter.

Ces arrière-trains et semi-remorques satisfont aux exigences normales du transport, mais, dans des circonstances de circulation difficile, à savoir sur routes sinueuses étroites ou en agglomération peuvent se poser des problèmes d'inscription de l'arrière de l'attelage dans les virages.

Pour obvier à ces inconvénients, il a été proposé d'équiper les arrière-trains et les essieux arrières des semi-remorques de grande longueur d'un moyen de changement de direction permettant un braquage des essieux, de manière à mieux contourner les virages serrés. Ces moyens de changement de direction sont sous forme de moyens hydrauliques ou hydro-mécaniques, dans le cas de la commande des roues d'un arrière-train, ou sous forme de moyens hydrauliques ou mécaniques, dans le cas de semi-remorques.

Ces moyens sont reliés au pivot d'attelage par l'intermédiaire d'un levier de direction actionnant un distributeur hydraulique ou directement une barre de direction relié à l'un des essieux, dans le cas des semi-remorques. Dans ce dernier cas et en présence de plusieurs essieux, ceux-ci sont reliés entre eux par des bielles de direction.

Ainsi, il est possible, à chaque changement de direction du tracteur, de transmettre, soit une impulsion de changement de direction ayant pour effet un actionnement de vérins ou autres dans le sens d'un pivotement des roues de l'arrière-train ou des essieux du semi-remorque, soit un mouvement de rotation d'un élément de guidage mécanique de l'un des essieux, ce mouvement étant retransmis par une ou plusieurs bielles aux autres essieux.

Toutefois, dans les cas de manoeuvre extrêmement difficile, à savoir de virage très fermé ou de manoeuvre délicate de stationnement, le pivotement normalement possible des roues de l'arrière-train ou de la semi-remorque n'est pas suffisant et il est nécessaire de réaliser un pivotement supplémentaire exceptionnel.

A cet effet, il a été proposé d'équiper la barre de direction des semi-remorques ou la bielle de direction des arrière-trains, d'un dispositif complémentaire d'actionnement mécanique ou hydraulique destiné à réaliser un pivotement angulaire supplémentaire des roues des essieux correspondants, par allongement temporaire des éléments mécaniques d'actionnement de la direction.

Les dispositifs mécaniques sont du type à vis et écrou actionné par un moteur électrique ou par un moteur hydraulique entraîné par un moteur auxiliaire.

Les dispositifs entièrement hydrauliques sont généralement constitués par deux vérins disposés en séries ou en parallèle, pouvant réaliser, seuls ou en combinaison, l'allongement temporaire et dont l'autre sert à assurer un blocage en position après réglage de l'allongement temporaire.

Les moyens et dispositifs connus d'augmentation de l'angle de braquage des roues permettent généralement de répondre à tous les problèmes de circulation ou de manoeuvre de stationnement pouvant se présenter pour des semi-remorques ou pour des attelages comportant des arrière-trains. Cependant, dans le cas d'utilisation de semi-remorques télescopiques, il se pose un problème de continuité de la transmission des mouvements de pivotement entre la liaison en rotation du pivot d'attelage du tracteur et la barre de direction agissant sur l'un des essieux de la semi-remorque.

Dans ce cas, il a également été proposé des solutions entièrement hydrauliques, mettant en oeuvre des conduites hydrauliques souples reliées à un distributeur solidaire de la semi-remorque. Cette solution présente, cependant, l'inconvénient de mettre en oeuvre une installation hydraulique importante, en particulier en ce qui concerne les conduites, et entraîne, de ce fait, des risques élevés de fuite au niveau des raccords ou des conduites elles-mêmes ou encore de rupture des conduites. De plus, l'utilisation de conduites sur des véhicules télescopiques nécessite également un guidage parfait et sûr de ces conduites pendant les manoeuvres d'allongement ou de raccourcissement.

On connaît également, par CH-A-579 473 une direction mécanique forcée, en particulier pour semi-remorques extensibles, qui est essentiellement constituée par une liaison en rotation du pivot d'attelage, par une barre de direction reliée, par une extrémité, à ladite liaison en rotation et, par son autre extrémité, à une tourelle à billes d'un essieu de la semi-remorque, la barre de direction étant pourvue d'un moyen d'allongement télescopique.

Cependant, la direction mécanique selon ce document ne prévoit pas un braquage complémentaire des roues, ni une possibilité d'allongement de la barre de direction en fonction d'un allongement de la semi-remorque.

La présente invention a pour but de pallier ces inconvénients.

Elle a, en effet, pour objet une direction mécanique forcée, en particulier pour semi-remorques extensibles, essentiellement constituée par une liaison en rotation du pivot d'attelage, par au moins une barre de direction reliée, par une extrémité, à ladite liaison en rotation et, par son autre extrémité, à une tourelle à billes d'un essieu de la semi-remorque, la barre de direction étant pourvue d'un moyen d'allongement télescopique, caractérisée en ce que la barre de direction est reliée à la liaison en rotation du pivot d'attelage par l'intermédiaire d'un levier de direction monté dans le châssis de la semi-remorque et lui-même relié à ladite liaison par l'intermédiaire d'un coin de direction, en ce qu'il est prévu un moyen de braquage complémentaire des roues du ou des essieux de la semi-remorque, constitué par un vérin auto-bloquant monté directement entre deux tronçons de la barre de direction et en ce que le moyen d'allongement télescopique de la barre de direction comporte un fourreau muni d'un dispositif de blocage en position de la barre de direction pouvant coopérer avec des perçages prévus à intervalles réguliers sur la barre de direction et correspondant aux verrouillages du châssis.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en plan représentant le dispositif conforme à l'invention ;
la figure 2 est une vue partielle en coupe transversale et à plus grande échelle du moyen d'allongement télescopique, et
la figure 3 est une vue en plan correspondant à la figure 2.

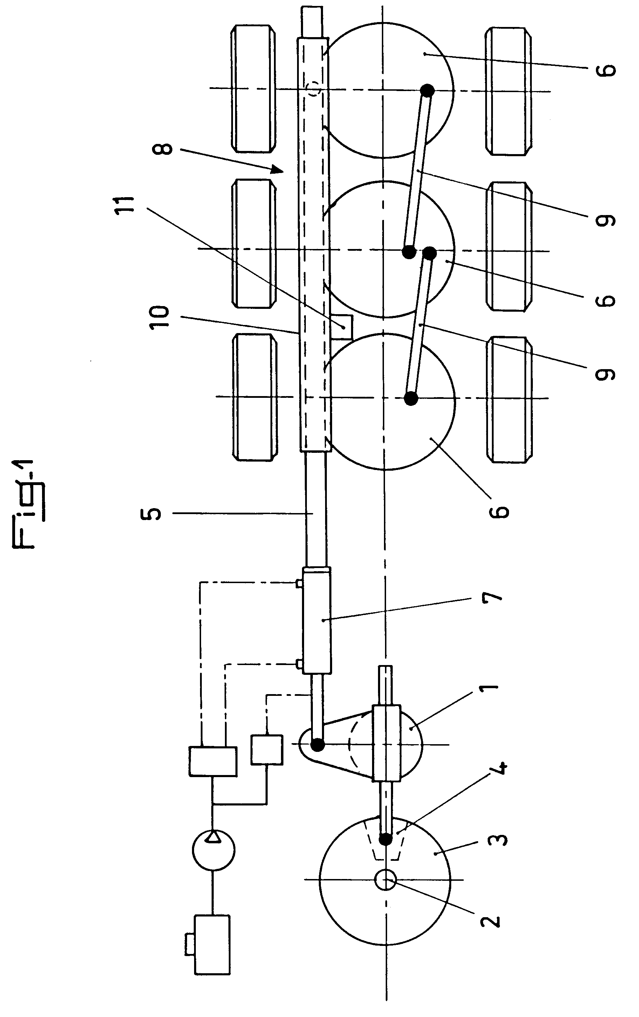

La figure 1 des dessins annexés représente, a titre d'exemple, une direction mécanique forcée, en particulier pour semi-remorques extensibles, essentiellement constituée par une liaison en rotation 2 du pivot d'attelage 3, par au moins une barre de direction 5 reliée, par une extrémité, à ladite liaison en rotation 2 et, par son autre extrémité, a une tourelle à billes 6 d'un essieu de la semi-remorque, la barre de direction 5 étant pourvue d'un moyen 8 d'allongement télescopique.

Conformément à l'invention, la barre de direction 5 est reliée à la liaison en rotation 2 du pivot d'attelage 3 par l'intermédiaire d'un levier de direction 1 monté dans le châssis de la semi-remorque et lui-même relié à ladite liaison par l'intermédiaire d'un coin de direction 4, et il est prévu un moyen 7 de braquage complémentaire des roues du ou des essieux de la semi-remorque, constitué par un vérin auto-bloquant monté directement entre deux tronçons de la barre de direction 5. En outre, le moyen 8 d'allongement télescopique de la barre de direction 5 comporte un fourreau 10 muni d'un dispositif 11 de blocage en position de la barre de direction 5 pouvant coopérer avec des perçages 12 prévus à intervalles réguliers sur la barre de direction 5 et correspondant aux verrouillages du châssis.

Dans le mode de réalisation représenté à la figure 1 des dessins annexés, la semi-remorque est munie de trois essieux pourvus chacun d'une tourelle à billes 6, lesdites tourelles étant reliées entre-elles par l'intermédiaire de bielles de direction 9.

Le moyen 8 d'allongement télescopique est constitué, de préférence, par un fourreau 10 solidarisé avec la tourelle à billes 6 de l'un des essieux de la semi-remorque, logeant l'extrémité de la barre de direction 5 opposée à celle reliée au levier de direction 1 et pourvu d'un dispositif 11 de blocage en position de la barre 5 dans le fourreau 10.

Le fourreau 10 peut-être logé directement dans un longeron du châssis de la semi-remorque ou à côté dudit longeron et est muni, près de son extrémité, du dispositif de blocage 11 qui coopère avec des perçages 12 prévus à intervalles réguliers, correspondant aux verrouillages du châssis, sur la barre de direction 5.

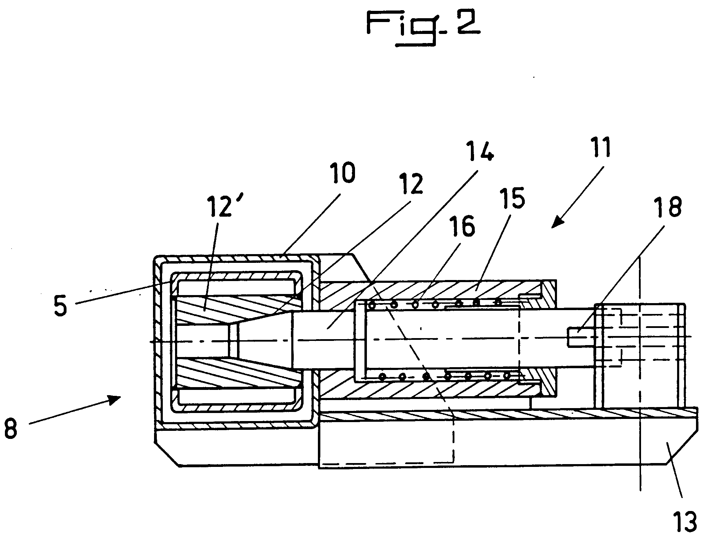

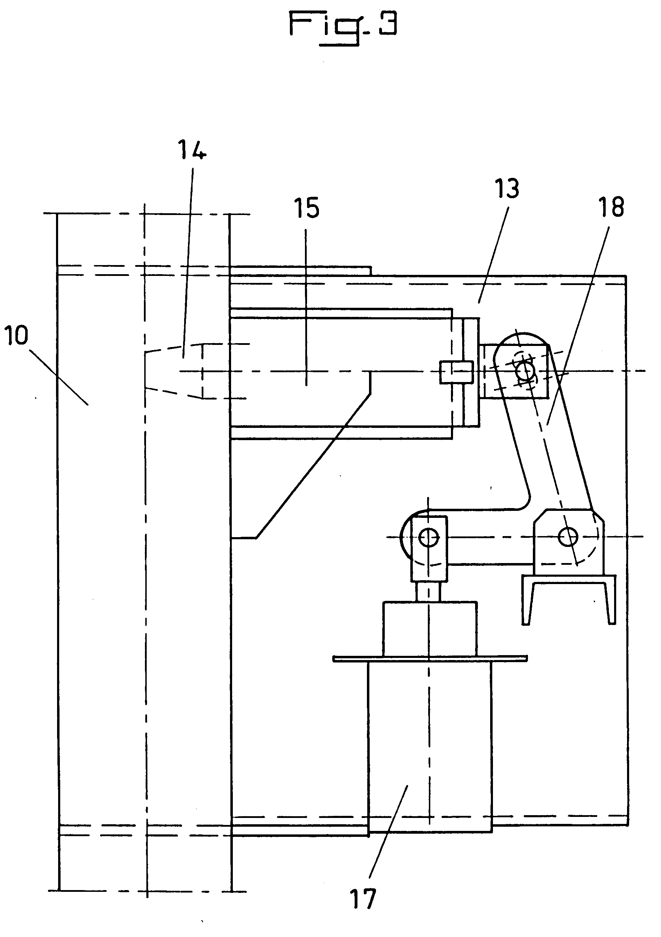

Le dispositif de blocage 11 est solidarisé avec le fourreau 10 par l'intermédiaire d'une platine 13 et se présente sous forme d'un verrou 14 logé dans une douille de guidage 15, coopérant avec les perçages 12 de la barre 5 et chargé par un ressort de blocage 16, ledit verrou 14 étant actionné dans le sens d'un déverrouillage au moyen d'un vérin 17, par l'intermédiaire d'une tringlerie 18 (figures 2 et 3).

L'extrémité du verrou 14 coopérant avec les perçages 12 présente avantageusement une forme tronconique. Ainsi, le centrage du verrou est parfaitement assuré et, en outre, un jeu éventuel entre le verrou 14 et le perçage 12 peut être compensé.

Il peut également être prévu, pour obtenir un positionnement plus précis du verrou 14 dans les perçages 12 correspondants, de munir la barre de direction 5 de douilles 12' portant les perçages 12, dont la section correspond à celle de l'extrémité du verrou 14. Grâce à un tel mode de réalisation, il est possible de réaliser un guidage conique entre verrou 14 et perçage 12 et d'améliorer la précision du positionnement de la barre de direction 5, après blocage.

Selon une caractéristique de l'invention, la barre de direction 5 est avantageusement pourvue d'un moyen, non représenté, de compensation des variations d'écartement des perçages 12 destiné à éviter une déviation des roues des essieux après réglage en longueur de la semi-remorque et de la barre 5. Ainsi, après déplacement de la barre 5 dans le fourreau 10 pour l'extension ou la rétraction de la semi-remorque et verrouillage dans la position désirée, il est possible de corriger un léger déport éventuel sur le moyen de compensation.

Ce moyen de compensation est prévu, de préférence, au niveau de l'extrémité de fixation de la barre 5 sur le levier de direction 1 ou du fourreau 10 sur la tourelle à billes 6 de l'essieu correspondant et est avantageusement constitué par un pivot de liaison 1' ou 6' monté de manière déplaçable suivant l'axe de la barre 5 par l'intermédiaire d'un vérin mécanique ou hydraulique solidaire de l'extrémité correspondante de la barre 5 ou du fourreau 10, le pivot 1' ou 6' pouvant éventuellement être bloqué, après réglage, par un dispositif mécanique.

Conformément à une autre caractéristique de l'invention, le moyen de compensation peut également être constitué par un dispositif inséré directement dans la barre de direction 5 et pouvant varier en longueur. A titre d'exemple, un tel dispositif pourrait être constitué par un vérin double effet bloqué en position après réglage de la compensation nécessaire.

Il est également possible de réaliser le moyen de compensation directement par utilisation du moyen 7 de braquage complémentaire. En effet, dans un tel cas, il suffit d'actionner ledit moyen 7 dans un sens ou dans l'autre d'une valeur de déplacement correspondant à la valeur angulaire à corriger et de bloquer ledit moyen 7 en position, cette position pouvant être indexée le cas échéant.

Lorsqu'il sera nécessaire, après coup, de réaliser un braquage supplémentaire des roues, il suffira d'actionner le moyen 7 de manière habituelle, l'indexage de la position de départ permettant un retour en position réglée de départ automatique.

Selon une autre caractéristique de l'invention, le moyen 7 de braquage complémentaire peut avantageusement être constitué par un vérin auto-bloquant monté directement entre deux tronçons de la barre de direction 5. Un tel vérin auto-bloquant permet, dans un encombrement de montage faible, de réaliser un allongement complémentaire de la barre 5 pour orienter les roues de la semi-remorque et, après retour en position normale, de régler l'alignement desdites roues avec celles du tracteur, puis de bloquer le vérin en position.

L'invention a été décrite à propos d'un dispositif mettant en oeuvre une seule barre de direction 5 disposée hors de l'infrastructure de châssis de la semi-remorque. Cependant, il est également possible de monter le dispositif directement dans l'infrastructure du châssis, et en particulier de le réaliser en deux barres de direction pouvant coulisser chacune dans un longeron et attaquant la tourelle à billes 6 de l'essieu correspondant en deux points diamétralement opposés. Dans un tel cas, la barre 5 et le fourreau 10 seront protégés par le longeron correspondant du châssis et leur liaison avec la tourelle 6 s'effectuera par l'intermédiaire de la platine 13.

Grâce à l'invention, il est possible de réaliser des semi-remorques extensibles présentant une direction mécanique forcée et dans lesquelles les éléments hydrauliques de liaison, à savoir les conduites, sont limités à un minimum, ce qui entraîne un amoindrissement notable du risque de fuites hydrauliques diverses.

En outre, du fait de la prévision d'une liaison mécanique entre le levier de direction 1 et la tourelle à billes 6 de l'un des essieux et d'un montage télescopique de la barre 5 dans le fourreau 10, il est possible d'assurer une liaison particulièrement rigide, ainsi qu'une longueur de télescopage importante.

Enfin, le moyen de compensation d'une déviation éventuelle des roues de la semi-remorque par rapport à celles du tracteur pouvant être confondu avec le moyen 7 de braquage complémentaire, il est possible de réaliser avec un même moyen ladite compensation et le braquage complémentaire, de sorte que le montage d'ensemble est nettement simplifié.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention tel que défini dans les revendications qui suivent.

## Revendications

1. Direction mécanique forcée, en particulier pour semi-remorques extensibles, essentiellement constituée par une liaison en rotation (2) du pivot d'attelage (3), par au moins une barre de direction (5) reliée, par une extrémité, à ladite liaison en rotation (2) et, par son autre extrémité, à une tourelle à billes (6) d'un essieu de la semi-remorque, la barre de direction (5) étant pourvue d'un moyen (8) d'allongement télescopique, caractérisée en ce que la barre de direction (5) est reliée à la liaison en rotation (2) du pivot d'attelage (3) par l'intermédiaire d'un levier de direction (1) monté dans le châssis de la semi-remorque et lui-même relié à ladite liaison par l'intermédiaire d'un coin de direction (4), en ce qu'il est prévu un moyen (7) de braquage complémentaire des roues du ou des essieux de la semi-remorque, constitué par un vérin auto-bloquant monté directement entre deux tronçons de la barre de direction (5) et en ce que le moyen (8) d'allongement télescopique de la barre de direction (5) comporte un fourreau (10) muni d'un dispositif (11) de blocage en position de la barre de direction (5) pouvant coopérer avec des perçages (12) prévus à intervalles réguliers sur la barre de direction (5) et correspondant aux verrouillages du châssis.

2. Direction, suivant la revendication 1, caractérisée en ce que le moyen (8) d'allongement télescopique est solidarisé avec la tourelle à billes (6) de l'un des essieux de la semi-remorque, logeant l'extrémité de la barre de direction (5) opposée à celle reliée au levier de direction (1) par l'intermédiaire de son fourreau (10).

3. Direction, suivant la revendication 2, caractérisée en ce que le fourreau (10) est logé directement dans un longeron du châssis de la semi-remorque ou à côté dudit châssis et est muni, près de son extrémité, du dispositif (11) de blocage en position de la barre de direction (5).

4. Direction, suivant l'une quelconque des revendications 2 et 3, caractérisée en ce que le dispositif (11) de blocage en position de la barre de direction (5) est solidarisé avec le fourreau (10) par l'intermédiaire d'une platine (13) et se présente sous forme d'un verrou (14) logé dans une douille de guidage (15), coopérant avec les perçages (12) de la barre de direction (5) et chargé par un ressort de blocage (16), ledit verrou (14) étant actionné dans le sens d'un déverrouillage au moyen d'un vérin (17), par l'intermédiaire d'une tringlerie (18).

5. Direction, suivant la revendication 4, caractérisée en ce que l'extrémité du verrou (14) coopérant avec les perçages (12) présente avantageusement une forme tronconique.

6. Direction, suivant l'une quelconque des revendications 4 et 5, caractérisée en ce que la barre de direction (5) est munie de douilles (12') portant les perçages (12), dont la section correspond à celle de l'extrémité du verrou (14).

7. Direction, suivant l'une quelconque des revendications 1 à 3, caractérisée en ce que la barre de direction (5) est avantageusement pourvue d'un moyen de compensation des variations d'écartement des perçages (12) destiné à éviter une déviation des roues des essieux après réglage en longueur de la semi-remorque et de la barre de direction (5).

8. Direction, suivant la revendication 7, caractérisée en ce que le moyen de compensation des variations d'écartement des perçages (12) est prévu, de préférence, au niveau de l'extrémité de fixation de la barre de direction (5) sur le levier de direction (1) ou du fourreau (10) sur la tourelle à billes (6) de l'essieu correspondant et est avantageusement constitué par un pivot de liaison (1' ou 6') monté de manière déplaçable suivant l'axe de la barre de direction (5) par l'intermédiaire d'un vérin mécanique ou hydraulique solidaire de l'extrémité correspondante de la barre de direction (5) ou du fourreau (10), le pivot (1' ou 6') pouvant éventuellement être bloqué, après réglage, par un dispositif mécanique.

9. Direction, suivant la revendication 7, caractérisée en ce que le moyen de compensation est constitué par un dispositif inséré directement dans la barre de direction (5) et pouvant varier en longueur.

10. Direction, suivant la revendication 7, caractérisée en ce que le moyen de compensation est réalisé directement par utilisation du moyen (7) de braquage complémentaire.

## Claims

1. Forced mechanical steering, in particular for extendable semi-trailers, essentially consisting of a rotatable connection (2) of the coupling pivot (3), of at least one steering rod (5) connected by one end to said rotatable connection (2) and, by its other end, to a ball turret (6) of an axle of the semi-trailer, the steering rod (5) being provided with a telescopic elongation means (8), characterised in that the steering rod (5) is connected to the rotatable connection (2) of the coupling pivot (3) by means of a steering lever (1) fitted in the chassis of the semi-trailer and itself connected to said connection by means of a steering wedge (4), in that a complementary means (7) for swinging the wheels of the axle or axles of the semi-trailer is provided and consists of a self-locking jack fitted directly between two portions of the steering rod (5) and in that the telescopic elongation means (8) of the steering rod (5) comprises a sleeve (10) equipped with a device (11) for locking the steering rod (5) in position and capable of cooperating with orifices (12) provided at regular intervals on the steering rod (5) and corresponding to the locking of the chassis.

2. Steering according to claim 1, characterised in that the telescopic elongation means (8) is connected to the ball turret (6) of one of the axles of the semi-trailer, accommodating the end of the steering rod (5) remote from that connected to the steering lever (1) by means of its sleeve (10).

3. Steering according to claim 2, characterised in that the sleeve (10) is accommodated directly in a sill of the chassis of the semi-trailer or to the side of said chassis and is equipped, close to its end, with the device (11) for locking the steering rod (5) in position.

4. Steering according to any one of claims 2 and 3, characterised in that the device (11) for locking the steering rod (5) in position is attached to the sleeve (10) by means of a plate (13) and has the form of a bolt (14) accommodated in a guide bush (15) cooperating with the orifices (12) in the steering rod (5) and loaded by a locking spring (16), said bolt (14) being actuated in the unlocking direction by means of jack (17) via a rod assembly (18).

5. Steering according to claim 4, characterised in that the end of the bolt (14) cooperating with the orifices (12) is advantageously in the form of a truncated cone.

6. Steering according to any one of claims 4 and 5, characterised in that the steering rod (5) is equipped with bushes (12') carrying the orifices (12), of which the cross section corresponds to that of the end of the bolt (14).

7. Steering according to any one of claims 1 to 3, characterised in that the steering rod (5) is advantageously provided with a means for Compensating the variations in spacing between the orifices (12) intended to prevent a deviation of the wheels of the axles after length adjustment of the semi-trailer and of the steering rod (5).

8. Steering according to claim 7, characterised in that the means for compensating the variations in spacing between the orifices (12) is preferably provided in the end region where the steering rod (5) is fixed on the steering lever (1) or the sleeve (10) is fixed on the ball turret (6) of the corresponding axle and advantageously consists of a connecting pivot (1' or 6') mounted displaceably along the axis of the steering rod (5) by means of a mechanical or hydraulic jack attached to the corresponding end of the steering rod (5) or of the sleeve (10), the pivot (1' or 6') possibly being locked, after adjustment, by a mechanical device.

9. Steering according to claim 7, characterised in that the compensation means consists of a device inserted directly in the steering rod (5) and capable of varying in length.

10. Steering according to claim 7, characterised in that the compensation means is produced directly using the complementary swinging means (7).

## Patentansprüche

1. Mechanische Zwangslenkung, insbesondere für verlängerbare Sattelauflieger, im wesentlichen bestehend aus einer drehbaren Verbindung (2) des Kupplungszapfens (3), wenigstens einer Lenkstange (5), die mit ihrem einen Ende mit der drehbaren Verbindung (2) und mit ihrem anderen Ende mit einem Kugeldrehkranz (6) einer Achse des Sattelaufliegers verbunden ist, wobei die Lenkstange (5) mit einer Teleskopverlängerung (8) versehen ist, dadurch gekennzeichnet, daß die Lenkstange (5) mit der drehbaren Verbindung (2) des Kupplungszapfens (3) unter Zwischenschaltung eines Gelenkhebels (1) gekuppelt ist, wobei dieser im Fahrgestell des Sattelaufliegers angeordnet und mit der drehbaren Verbindung (2) mittels eines Lenkkeils (4) gekuppelt ist, daß eine zusätzliche Lenkeinrichtung (7) der Räder der Achse oder der Achsen des Sattelaufliegers vorgesehen ist, die aus einer direkt zwischen zwei Abschnitten der Lenkstange (5) angeordneten, sich selbsttätig verriegelnden Kolben-Zylinder-Einheit besteht und daß die Teleskopverlängerung (8) der Lenkstange (5) eine mit einer Stellungsverriegelung (11) der Lenkstange (5), die geeignet ist, mit in regelmäßigen Abständen an der Lenkstange (5) angeordneten, den Verriegelungen des Fahrgestells entsprechenden Bohrungen (12) zusammenzuwirken, versehene Hülse aufweist.

2. Lenkung nach Anspruch 1, dadurch gekennzeichnet, daß die Teleskopverlängerung (8) an dem Kugeldrehkranz (6) einer der Achsen des Sattelaufliegers befestigt ist und das Ende der Lenkstange (5) mittels seiner Hülse (10) aufnimmt, das demjenigen entgegengesetzt ist, das mit dem Lenkhebel (1) verbunden ist.

3. Lenkung nach Anspruch 2, dadurch gekennzeichnet, daß die Hülse (10) direkt in einem Längsträger des Fahrgestells des Sattelaufliegers oder seitlich des Fahrgestells angeordnet ist und in der Nähe seines Endes mit der Stellungsverriegelung (11) der Lenkstange (5) versehen ist.

4. Lenkung nach Anspruch 2 oder 3, dadurch gekennzeichnet, daß die Stellungsverriegelung (11) der Lenkstange (5) an der Hülse (10) mittels einer Platte (3) befestigt ist und als in einer Führungshülse (15) angeordneter Verriegelungszapfen (14) ausgebildet ist, der mit den Bohrungen (12) der Lenkstange (15) zusammenwirkt und durch eine Verriegelungsfeder (16) belastet ist, wobei der Verriegelungszapfen (14) zum Entriegeln mittels einer Kolben-Zylinder-Einheit (17) unter Zwischenschaltung eines Gestänges (18) betätigt wird.

5. Lenkung nach Anspruch 4, dadurch gekennzeichnet, daß das mit den Bohrungen (12) zusammenwirkende Ende des Verriegelungszapfens (14) vorteilhafterweise kegelstumpfartig ausgebildet ist.

6. Lenkung nach Anspruch 4 oder 5, dadurch gekennzeichnet, daß die Lenkstange (5) mit Bohrungen (12) versehene Hülsen (12') aufweist, deren Querschnitt dem des Endes des Verriegelungszapfens (14) entspricht.

7. Lenkung nach einem der Ansprüche 1 bis 3, dadurch gekennzeichnet, daß die Lenkstange (5) vorteilhafterweise mit einer Einrichtung zum Ausgleich der Abstandsabweichungen der Bohrungen (12) versehen ist, die dazu bestimmt ist, eine Abweichung der Räder der Achsen nach dem Einstellen der Länge des Sattelaufliegers und der Lenkstange (5) zu vermeiden.

8. Lenkung nach Anspruch 7, dadurch gekennzeichnet, daß die Einrichtung zum Ausgleich der Abweichungen des Abstandes der Bohrung (12) vorzugsweise in Hohe des Befestigungsendes der Lenkstange (5) am Lenkhebel (1) oder der Hülse (10) am Kugeldrehkranz (6) der entsprechenden Achse vorgesehen ist und vorteilhafterweise aus einem in Achsrichtung der Lenkstange (5) mittels einer mit dem entsprechenden Ende der Lenkstange (5) oder der Hülse (10) verbundenen mechanischen Winde oder einer Hydraulik-Kolben-Zylinder-Einheit verschiebbaren Verbindungszapfen (1' oder 6') besteht, wobei sich dieser Verbindungszapfen (1' oder 6') gegebenenfalls nach dem Einstellen mittels einer mechanischen Vorrichtung verriegeln läßt.

9. Lenkung nach Anspruch 7, dadurch gekennzeichnet, daß die Ausgleichseinrichtung aus einer direkt in die Lenkstange (5) eingesetzten und längenveränderlichen Vorrichtung besteht.

10. Lenkung nach Anspruch 7, gekennzeichnet durch die direkte Verwendung der zusätzlichen Lenkeinrichtung (7) als Ausgleichseinrichtung.
